# EUROPEAN PATENT APPLICATION

(11) **EP 4 811 250 A1**
(43) Date of publication of application: **23.09.2026**
(21) Application number: 26165579.9
(22) Date of filing: 17.03.2026
(51) Int. Cl.: G06Q 20/02, G06Q 20/20, G06Q 20/22, G06Q 20/40, G07G 1/00

(54) **METHOD AND SYSTEM FOR ORCHESTRATING A POINT-OF-SALE (POS) PAYMENT TRANSACTION ACROSS A PLURALITY OF PAYMENT GATEWAY PROVIDERS**

(30) Priority: 17.03.2025 EP 25305360
(71) Applicant: PayPOS LLC, Dover, Delaware 19904 (US)
(72) Inventor: MEIMOUN, Thierry Mardoch, 75116 Paris (FR)
(74) Representative: BCF Global

(57) **Abstract**

A system and method for orchestrating a point-of-sale (PoS) payment transaction across a plurality of payment gateway providers is provided. The method comprising: receiving, at the PoS device, a selection, by a user, of a payment method from a plurality of payment methods for a payment transaction; determining a first payment gateway provider from a ranked list of payment gateway providers eligible to process the selected payment method; transmitting a first transaction request to the first payment gateway provider causing the first payment gateway provider to transmit a response to the PoS device; in response to the response meeting a predetermined condition, selecting a second payment gateway provider from the ranked list of gateway providers; and re-initiating the payment transaction by transmitting a second transaction request to the second payment gateway provider.

## Description

### CROSS-REFERENCE TO RELATED APPLICATIONS

The present application claims priority to European Patent Application No. 25305360.7 filed on March 17, 2025, the entirety of which is incorporated herein by reference.

### FIELD OF THE PRESENT TECHNOLOGY

The present technology relates to electronic payment systems and point-of-sale (POS) technologies and, in particular, to a transaction orchestration system executed on a PoS device.

### BACKGROUND

Merchants use point of sale (PoS) payment terminal devices (PoST) to consummate cashless, secured financial transactions with customers. Customers conduct these types of transactions with payment cards, such as, credit cards, debit cards, prepaid payment cards, *etc.,* which are issued by financial or payment card institutions. These payment cards include a magnetic strip and/or a smart card chip allowing a transaction to be initiated by having customers interface payment cards with PoSTs, either by swiping the card in a magnetic strip reader of a PoST or by proximate contactless presentment to a near field communication (NFC) reader of the PoST.

PoS systems are widely deployed to execute secure financial transactions between merchants and customers using payment cards, digital wallets, bank transfers, and other electronic payment mechanisms. Such systems are typically implemented on dedicated PoS terminals or mobile devices running a resident operating system and one or more certified payment processing modules that comply with regulatory and security requirements.

Conventional PoS architectures, however, are generally designed to operate through a single payment rail or a fixed set of payment providers. As a result, transaction execution is often dependent on the availability, responsiveness, and geographic suitability of a selected provider. When a provider experiences increased latency, service degradation, or temporary unavailability, transaction failures may occur, leading to increased downtime, reduced transaction success rates, and degraded user experience.

With this said, it will be appreciated that the subject matter discussed in the background section should not be assumed to be prior art merely as a result of its mention in the background section. Similarly, any problem/issues mentioned in the background section or associated with the subject matter of the background section should not be assumed to have been previously recognized by any prior art other than the noted disclosures provided by the developers of the present application.

### SUMMARY

The embodiments of the present technology are based on the developers' appreciation that reliability and resilience of point-of-sale financial transactions can be improved through a technical orchestration mechanism executed on a PoS device, wherein transaction requests are dynamically routed across a plurality of payment gateway providers, monitored using response and timeout conditions, and adaptively adjusted based on transaction outcomes and configuration data. In particular, the present technology addresses limitations of conventional PoS systems that rely on a single payment provider by introducing automated fallback, performance-based provider prioritization, and server-assisted transaction status synchronization.

In accordance with a first broad aspect of the present technology, there is disclosed a computer-implemented method for orchestrating a point-of-sale (PoS) payment transaction across a plurality of payment gateway providers, the method executable by a processor of a PoS device, the method comprising: receiving, at the PoS device, a selection, by a user, of a payment method from a plurality of payment methods for a payment transaction; determining a first payment gateway provider from a ranked list of payment gateway providers eligible to process the selected payment method; transmitting a first transaction request to the first payment gateway provider causing the first payment gateway provider to transmit a response to the PoS device; in response to the response meeting a predetermined condition, selecting a second payment gateway provider from the ranked list of gateway providers; and re-initiating the payment transaction by transmitting a second transaction request to the second payment gateway provider.

In some non-limiting embodiments, the plurality of payment methods comprises at least one of a credit payment, a debit payment, a buy-now-pay-later payment, a cryptocurrency payment, an email payment link, an SMS payment link, a QR code payment and/or an automated voice communication payment.

In some non-limiting embodiments, the first transaction request and the second transaction request are a respective API request.

In some non-limiting embodiments, the predetermined condition is one of: the response is not received by the PoS device within a defined period from the transmission of the first transaction request; the response received by the PoS device is an error response indicating that the payment transaction cannot be successfully processed by the first payment gateway provider.

In some non-limiting embodiments, the method further comprises initiating, by the PoS device, a timer upon transmission of the first transaction request.

In some non-limiting embodiments, the PoS device is communicatively coupled to a server, the method further comprising: receiving, by the PoS device, transaction status information generated by the server, the transaction status information being derived from a callback corresponding to the payment transaction, wherein the callback comprises a message generated by the second payment gateway provider, and wherein the transaction status information is indicative of an execution status of the payment transaction.

In some non-limiting embodiments, the method further comprises displaying, on a graphical user interface of the PoS device, the execution status of the payment transaction based on the transaction status information.

In some non-limiting embodiments, the PoS device is communicatively coupled to a server, the method further comprising, receiving from the server, a time value associated with the defined period.

In some non-limiting embodiments, the ranked list of payment gateway providers has been previously generated based on at least one of: payment gateway provider availability; transaction cost parameter; performance metrics associated with payment gateway providers, the performance metric for a given payment gateway provider comprising at least one of a success rate metric, a response latency metric and an error frequency metric; and a geographical location of the PoS device.

In some non-limiting embodiments, the method further comprises updating the ranked list of gateway providers based on transaction data received by the PoS device during execution of the payment transaction, the transaction data including at least one of the response received from the first gateway provider and the transaction status information received from the server.

In some non-limiting embodiments, the method further comprises using the updated ranked list of gateway providers to determine a payment gateway provider for a subsequent payment transaction.

In some non-limiting embodiments, the method further comprises in response to the predetermined condition being met for the second gateway provider, selecting a third payment gateway provider from the ranked list of gateway providers and transmitting a third transaction request to the third payment gateway provider.

In some non-limiting embodiments, the re-initiating the payment transaction is executed without notifying the user.

In accordance with another broad aspect of the present technology, there is disclosed a point-of-sale (PoS) device for orchestrating a payment transaction across a plurality of payment gateway providers, the PoS device comprising by a processor configured to: receive, a selection by a user of a payment method from a plurality of payment methods for the payment transaction; determining a first payment gateway provider from a ranked list of payment gateway providers eligible to process the selected payment method; transmitting a first transaction request to the first payment gateway provider causing the first payment gateway provider to transmit a response to the PoS device; in response to the response meeting a predetermined condition, selecting a second payment gateway provider from the ranked list of gateway providers; and re-initiating the payment transaction by transmitting a second transaction request to the second payment gateway provider.

In some non-limiting embodiments, the plurality of payment methods comprises at least one of a credit payment, a debit payment, a buy-now-pay-later payment, a cryptocurrency payment, an email payment link, an SMS payment link, a QR code payment and/or an automated voice communication payment.

In some non-limiting embodiments, the first transaction request and the second transaction request are a respective API request.

In some non-limiting embodiments, the predetermined condition is one of: the response is not received by the PoS device within a defined period from the transmission of the first transaction request; the response received by the PoS device is an error response indicating that the payment transaction cannot be successfully processed by the first payment gateway provider.

In some non-limiting embodiments, the processor is further configured to initiate a timer upon transmission of the first transaction request.

In some non-limiting embodiments, the PoS device is communicatively coupled to a server and the processor is further configured to receive transaction status information generated by the server, the transaction status information being derived from a callback corresponding to the payment transaction, wherein the callback comprises a message generated by the second payment gateway provider, and wherein the transaction status information is indicative of an execution status of the payment transaction.

In accordance with another broad aspect of the present technology, there is disclosed a non-transitory computer-readable medium comprising executable instructions which, when executed by at least one processor, cause the at least one processor to carry out steps of a method for orchestrating a point-of-sale (PoS) payment transaction across a plurality of payment gateway providers, the method comprising: receiving, at the PoS device, a selection, by a user, of a payment method from a plurality of payment methods for a payment transaction; determining a first payment gateway provider from a ranked list of payment gateway providers eligible to process the selected payment method; transmitting a first transaction request to the first payment gateway provider causing the first payment gateway provider to transmit a response to the PoS device; in response to the response meeting a predetermined condition, selecting a second payment gateway provider from the ranked list of gateway providers; and re-initiating the payment transaction by transmitting a second transaction request to the second payment gateway provider.

In the context of the present specification, unless expressly provided otherwise, a computer system may refer, but is not limited to, an "electronic device", an "operation system", a "system", a "computer-based system", a "controller unit", a "monitoring device", a "control device" and/or any combination thereof appropriate to the relevant task at hand.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

Moreover, unless expressly provided otherwise, the words "first", "second", "third", *etc.* have been used as adjectives only for the purpose of allowing for distinction between the nouns that they modify from one another, and not for the purpose of describing any particular relationship between those nouns. It should also be understood that terms relating to the position and/or orientation of components such as "upper", "lower", "top", "bottom", "front", "rear", "left", "right", are used herein to simplify the description and are not intended to be limitative of the particular position/orientation of the components in use.

Furthermore, it should be understood that the use of the phrase "at least one of A and B" is intended to mean A only, B only, or both A and B.

Additional and/or alternative features, aspects and advantages of implementations of the present technology will become apparent from the following description, the accompanying drawings and the appended claims.

### BRIEF DESCRIPTION OF THE DRAWINGS

Features and advantages of the present disclosure will become apparent from the following detailed description, taken in combination with the appended drawings, in which it should be understood that, unless explicitly identified, the drawings should not be assumed to be to scale, as various features may be exaggerated, scaled down, or omitted for purposes of clarity. Accordingly:
FIG. 1 (Prior Art) is an exemplary representation of a conventional system for conducting a point of sale (PoS) cashless secure financial transaction on a merchant PoS terminal (PoST);
FIG. 2 (Prior Art) is a simplified block diagram of a conventional PoST device for actuating a cashless secure financial transaction;
FIG. 3 depicts a functional block diagram of a universal point of sale (PoS) platform for executing local and remote secure financial transactions, in accordance with embodiments of the present technology;
FIG. 4 depicts an exemplary representation of an interactive graphical user interface display of a universal PoS platform device, in accordance with embodiments of the present technology;
FIG. 5 depicts a schematic illustration of an orchestration application executable by the PoST device;
FIG. 6 depicts a flow diagram for ordered selection of payment gateway providers executable by the orchestration application depicted in FIG. 5; and
FIG. 7 depicts a block diagram of a flow chart of a method for orchestrating a point-of-sale (PoS) payment transaction across a plurality of payment gateway providers.

In the drawings, embodiments of the invention are illustrated by way of example. It is to be expressly understood that the description and drawings are only for purposes of illustration and as an aid to understanding. They are not intended to be a definition of the limits of the invention.

### DETAILED DESCRIPTION OF EMBODIMENTS

The present technology will now be described in connection with one or more contemplated embodiments, as disclosed. The disclosed embodiments are intended to be exemplary of the present technology and not limiting of the scope thereof. In other words, while attention may be focused on specific embodiments of the present technology, those embodiments are not intended to limit the present technology. To the contrary, the examples provided below are intended to illustrate the broad scope of the present technology.

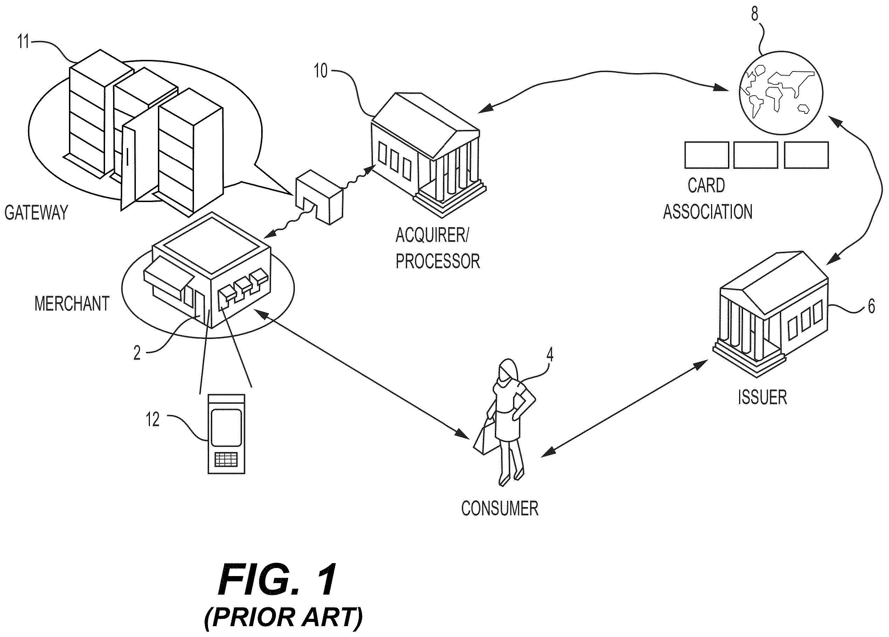

With this said, FIG. 1 (Prior Art) is an exemplary representation of a conventional system for conducting point of sale (PoS) secure financial transactions on an on-site merchant PoS terminal (PoST) device 12. In the exemplary representation, a customer 4 has an established contractual relationship with a customer-associated financial institution/issuer 6, in which the financial issuer 6 holds a customer's 4 financial account credentials (*e.g.,* checking account, savings account, or credit card account) and, in turn, issues customer 4 with a payment card (e.g., credit card, debit card, prepaid payment cards, *etc.*). The payment card may be held by payment card company 8 that communicates with both, the customer-associated financial issuer 6 and a merchant-associated financial institution 10.

Commensurately, merchant 2 has an established contractual relationship with the merchant-associated financial institution 10 holding a merchant's financial account. The financial institution 10 may be a bank that maintains the merchant's checking account or credit card account and allows merchant 2 to conduct cashless financial transactions, through a gateway 11, with customers 4. Although gateway 11 is depicted, it should be understood that financial transactions may occur directly between the merchant 2 and the financial institution 10 with no gateway in between.

Therefore, within conventional systems, a customer 4 purchases an item from merchant 2 and presents payment card to interface with a merchant on-site PoST device 12 to initiate a cashless secure financial transaction. The transaction is subject to consummation approval by the customer-associated financial institution/issuer 6 and/or payment card company 8.

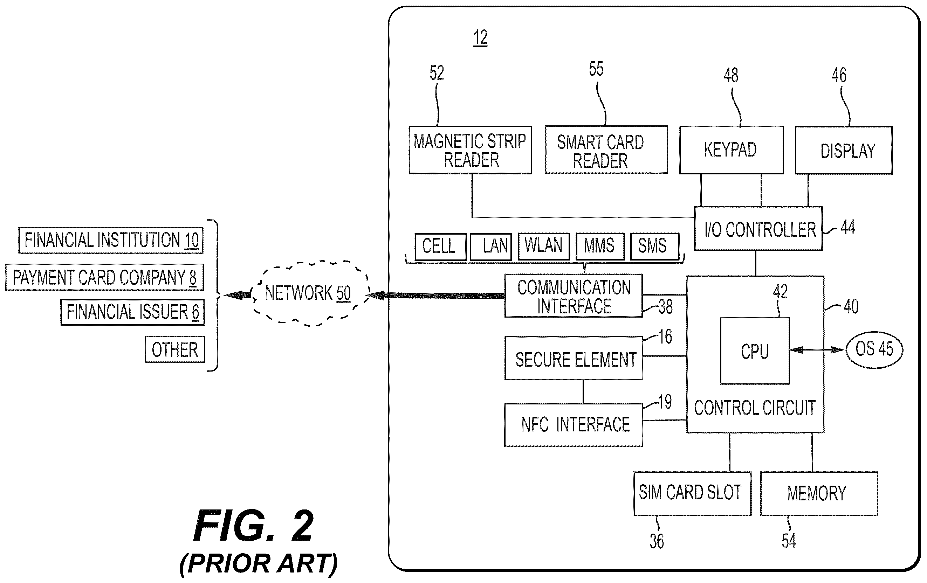

Regarding merchant on-site PoST device, FIG. 2 (Prior Art) depicts simplified block diagram of a conventional PoST device 12 for conducting a cashless secure financial transaction. As shown, PoST device 12 may include a secure element 16, a near field communication (NFC) interface 19, a smart card reader 55, a subscriber identity module (SIM) card slot 36, a communication interface 38, a control circuit 40, a central processing unit (CPU) 42 on which an operating system (OS) 45 of the device 12 is running, an input/output (I/O) controller 44, a display 46, a keypad 48, a printer (*not shown*), a magnetic strip reader 52, and a memory 54. Examples of OS 45 running on the CPU 42 include, but are not limited to, a version of iOS^{®}, or a derivative thereof, available from Apple Inc.; a version of Android OS^{®}, or a derivative thereof, available from Google Inc.; a version of PlayBook OS^{®}, or a derivative thereof.

In operation, PoST device 12 is controlled by the CPU 42 and the control circuit 40 to provide the processing capability required to execute the OS 45 of the PoST device 12. The CPU 42 may include a single processor, a plurality of processors, or a combination of general and special purpose microprocessors. The control circuit 40 may include one or more data buses for transferring data and instructions between components of the PoST device 12. The control circuit 40 may also include on board memory for caching purposes.

The data used by the CPU 42 may be located in the memory 54. The memory 54 may be a non-volatile memory such as read only memory, flash memory, a hard drive, or any other suitable optical, magnetic, or solid-state computer readable media, as well as a combination thereof. The memory 54 may be used for storing data required for the operation of the CPU 42 as well as other data required for the PoST device 12. For example, the memory 54 may store the firmware of the PoST device 12, such as OS 45 and programs that enable various functions of the electronic device 12, graphical user interface (GUI) functions, or processor functions. The memory 54 may also include data files such as connection information (e.g., information used to establish a communication), or data allowing the PoST device 12 to run a payment control application. The payment control application is one of the software components (executed by the CPU 42) of the point of sale application. The data stored in the memory 54 allowing the PoST device 12 to run the payment control application includes data to generate a GUI on the display 46 used to conduct a secured financial transaction and the required processing capabilities to complete a secured financial transaction. In addition, the memory 54 may store data to control the activation/deactivation of the NFC interface 19 and, when activated, control the operation mode of the NFC interface 19.

The communication interface 38 may provide connectivity channels for receiving and transmitting data to and from a network 50. As such, the communication interface 38 may provide connectivity functions to allow PoST device 12 to communicate with financial institution 10, payment card company 8, financial issuer 6, and other institutions. The communication interface 38 may represent, for example, one or more network interface cards (NIC) or a network controller as well as associated communication protocols. As shown, communication interface 38 may include several types of interfaces, including but not limited to, wireless local area network (WLAN) interface, a local area network (LAN) interface, a wide area network (WAN) interface, a multimedia message service (MMS), a short message service (SMS) interface, *etc.*

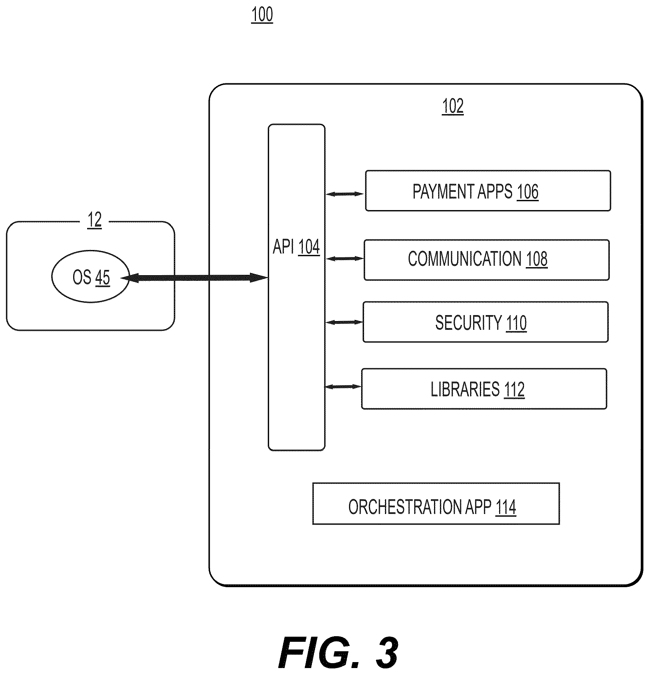

With this said, FIG. 3 depicts an exemplary representation of a functional universal point of sale (PoS) platform 100 for executing local and remote secure financial transactions, in accordance with embodiments of the present technology. The platform 100 is based on a universal interoperable OS 102 that is designed to be integrated into, compatible with, the existing ecosystems and OS 45 of PoST device 12. As such, universal OS 102 is configured to be seamlessly operate with all prevalent OSs, such as, for example, Apple iOS^{®}, Google OS^{®}, PlayBook OS^{®}, *etc.* and any derivatives/extensions thereof.

As shown, universal OS 102 incorporates an application programming interface (API) layer 104 that is configured to seamlessly integrate and exchange data with the resident OS 45 of the PoST device 12. API layer 104 is communicatively connected to applications module 106, communication module 108, security module 110, and library module 112. In accordance with embodiments of the present technology, the universal OS 102 further comprises an orchestration application 114 executable by the CPU 42 and configured to coordinate processing between the application module 106 and a plurality of payment service providers (i.e. payment gateway providers 11) by controlling transmission of transaction requests, monitoring status information and automatically initiating fallback processing via another payment service provider upon detection of at least one predefined condition (described in more details below).

In some embodiments, the orchestration application 114 is implemented as an overlay execution layer executed on an Android-based operating system of the PoS platform 100. The overlay execution layer is configured to interface with a resident operating system and a native payment processing system via application programming interfaces, without modifying or replacing any certified native payment modules. In this manner, the orchestration application 114 extends transaction processing functionality while preserving certification integrity of the native payment environment. This architectural separation enables additional orchestration logic to be deployed on the PoS platform 100 without requiring recertification of the underlying payment processing system.

In some embodiments, the orchestration application 114 corresponds to computer program instructions stored on a non-transitory computer-readable medium (for example, the memory 54 of the PoST device 12 and/or a storage device associated with the PoST device 12). When executed by the CPU 42, the computer program instructions cause the PoST device to perform one or more functionalities described herein below.

The application module 106 comprises software applications for both local and remote PoST payment transactions. As such, application module 106 incorporates conventional PoST programs for processing payment by credit cards, debit cards, and prepaid payment cards. Additionally, application module 106 incorporates programs for processing real-time payment through alternative online third-party payment systems, such as, but not limited to, PayPal^{™}, ApplePay^{™}, GooglePay^{™}, AliPay^{™}, WeChatPay^{™}, *etc.* as well as programs for third-party payment systems for buy-now-pay-later options, such as, but not limited to, Klarna^{™}, Alma^{™}, SoFort^{™}, *etc.* Application module 106 also incorporates auxiliary programs directed to the implementation of numerous languages and international currencies. In some embodiments, the application module 106 incorporates programs for processing payments by cryptocurrency.

The communication module 108 is configured with communication protocols to establish and maintain a real-time remote communication channel between a customer and merchant during remote payment transactions as well as communicate via cellular, MMS, SMS, and WLAN channels. Such real-time remote communication protocols may include *http, websocket, etc.*

The security module 110 is configured to ensure compliance with secure payment processing and communications with payment card and industry security standards and certifications.

The library module 112 is configured to support application module 106, communication module 108, and security module 110 by containing relevant files and data required for the proper execution of the noted modules. As such, library module 112 may include payment application-related data, such as credit/debit/prepaid card information, alternative real-time online third-party payment information, and third-party buy-now-pay-later information. The library module 112 may also include language and international currency information. Library module 112 additionally includes communication-related information to maintain real-time remote communication channel between customer and merchant. Library module 112 may further include security-related credential information regarding the payment and communication programs.

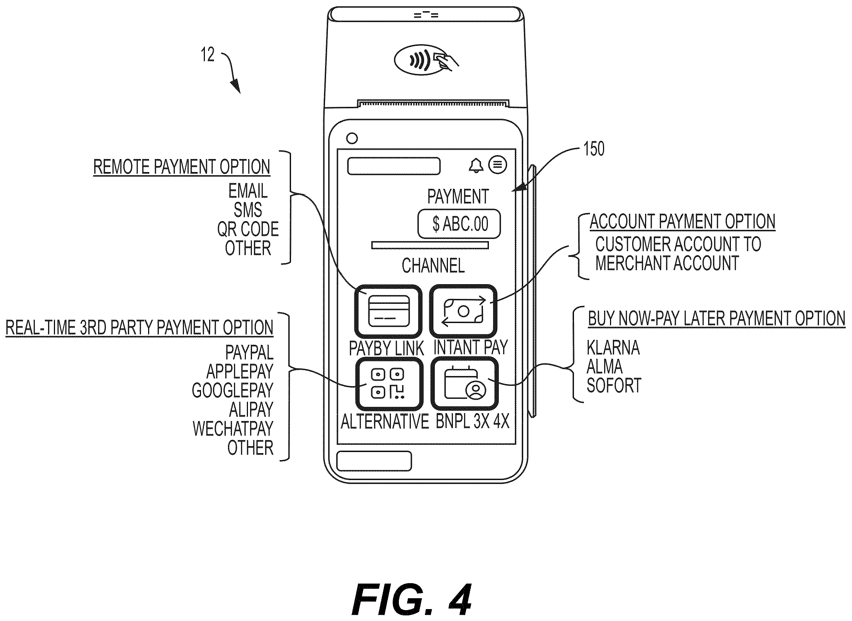

FIG. 4 depicts an exemplary representation of an interactive graphical user interface display 150 of the universal PoS platform 100, in accordance with embodiments of the present technology. As shown, display 150 provides customers with a facility to interact with universal PoS platform 100 in order to consummate payment transactions via variety of payment options, including remote payment option, real-time third-party payment option, account payment option, and buy now-pay later payment option.

In particular, the remote payment option enables customers to conduct payment transactions with merchants by exchanging information via one or more remote communication channels, such as email, SMS, QR code, automated voice communication, or other means. The real-time third-party payment option enables customers to conduct real-time payment transactions with merchants by accessing third-party payment entities, such as, PayPal^{™}, ApplePay^{™}, GooglePay^{™}, AliPay^{™}, WeChatPay^{™}, *etc.*

The account payment option enables customers to conduct payment transactions with merchants by exchanging customer account information, such as checking accounts, credit card account, savings account, *etc.* with the merchant. The buy now-pay later payment option enables customers to conduct payment transactions with merchants by accessing third-party payment entities, such as Klarna^{™}, Alma^{™}, SoFort^{™}, *etc.* that service the purchase of items with delayed payments.

In this manner, the universal PoS platform 100 provides an infrastructure that enables the consummation of local and remote secure financial transactions through numerous different payment means and through numerous communication channels.

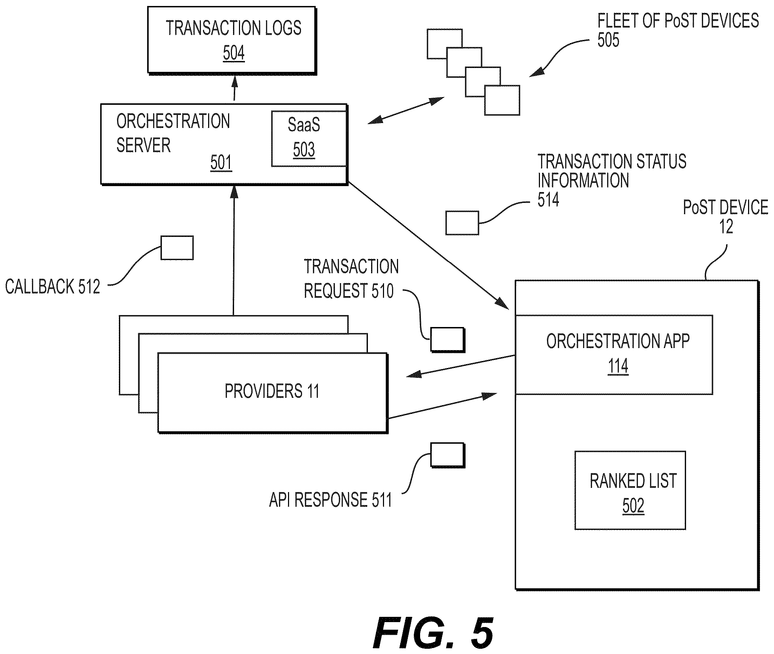

With reference to Fig. 5, there is provided a schematic illustration of the orchestration application 114 being implemented in accordance with non-limiting embodiments of the present technology.

In some embodiments, the orchestration application 114 is executable by the CPU 42 to execute one or more functions (described in more details below) while maintaining compatibility with existing certified payment environments. In particular, the orchestration application 114 is configured to interface with, and exchange data with, the native payment processing system of the PoS platform 100 without modification. In this manner, the orchestration application 114 enables additional functionality to be executed on the PoS platform 100 through API-based integration while preserving certification integrity of the native payment processing system.

In some embodiments, the orchestration application 114 is communicatively coupled (for example, via the network 50) to an orchestration server 501. The orchestration server 501 can be implemented as a conventional computer server. In an example of an embodiment of the present technology, the orchestration server 501 can be implemented as a Dell^{™} PowerEdge^{™} Server running the Microsoft^{™} Windows Server^{™} operating system. Needless to say, the orchestration server 501 can be implemented in any other suitable hardware, software, and/or firmware, or a combination thereof. In the depicted non-limiting embodiments of the present technology, the orchestration server 501 is a single server. In alternative non-limiting embodiments of the present technology, the functionality of the orchestration server 501 may be distributed and may be implemented via multiple servers.

The orchestration server 501 comprises a communication interface (not depicted) structured and configured to communicate with various entities, such as the PoST device 12 via the network 50.

In some embodiments, the orchestration server 501 is operatively coupled to a centralized software-as-a-service (SaaS) management interface 503 configured to govern operation of a plurality of distributed PoS platforms 100. The SaaS management interface 503 enables dynamic configuration of orchestration parameters, including timeout intervals (described in detail below), provider prioritization rules (described in detail below), and activation and deactivation of a specific PoS platform across a fleet of PoST devices 505. In this manner, transaction execution logic is distributed to individual PoS platforms/devices while operational governance is centrally managed.

Generally speaking, when a payment transaction is initiated on the PoST device 12, the orchestration application 114 is configured to transmit a transaction request 510 to the provider 11 by an API call. In some embodiments, in response to receiving the transaction request 510, the provider 11 may provide an API response 511 which is indicative of an immediate processing outcome of the API call, such as an acknowledgement that the transaction request 510 has been received and accepted for processing, a pending indication, or an error condition associated with the API call (e.g., an API error code).

A transaction status information 514 may be sent by the orchestration server 501 that includes, by way of non-limiting example, a transaction identifier and/or reference, a merchant identifier, a provider identifier, and a transaction state indication reflecting an execution status of the transaction (e.g., approved, declined, failed, cancelled, pending, or completed), as determined based on a callback 512 (described in more details below).

In this manner, the API response 511 may be a synchronous response returned directly to the orchestration application 114 as part of the API exchange for the transaction request 510, whereas the callback 512 is an asynchronous response delivered to the orchestration server 501 after the transaction request 510 has been received, and the transaction status information 514 corresponds to status data derived from the asynchronous callback 512 and pushed to the PoST device 12 to update the transaction state presented thereon.

In some embodiments, prior to initiating transmission of the transaction request 510, the orchestration application 114 or the orchestration server 501 is configured to generate or obtain a prioritized ranked list 502 of payment gateway providers 11 eligible to process the transaction. In some embodiments, the ranked list 502 defines an ordered sequence of payment gateway providers 11 to be used for routing the transaction and potential fallback (described in more details below).

The manner in which the ranked list 502 is generated is not limited. In some embodiments, the orchestration server 501 is configured to generate and/or maintain transaction logs 504 corresponding to previous payment transactions processed by a plurality of payment gateway providers 11 with the fleet of PoST devices 505. A transaction log may include, by way of non-limiting example, a provider identifier, a transaction identifier, a timestamp, a success/failure indicator, and response timing information indicative of provider responsiveness. Such transaction logs 504 enable evaluation of provider performance over time and may be used as an input to determining provider prioritization. Although the transaction logs 504 as illustrated as being stored or accessible by the server 501, it is not limited as such, and it is contemplated that the transaction logs 504 are stored within the PoST device 12.

In some embodiments, the transaction logs 504 are processed, by the server 501 (or the PoST device 12) to derive one or more provider performance metrics for respective payment gateway providers 11. By way of non-limiting example, the one or more provider performance metrics may include a success rate metric, a response latency metric, transaction cost parameters, and error frequency, each computed from recent and/or historical transaction outcomes recorded in the transaction logs 504. In some embodiments, additional reliability indicators may be derived, such as an error frequency metric indicative of a number of predefined error conditions and/or timeout events observed for a given provider within a given time interval.

In some embodiments, the ranked list 502 is generated using one or more heuristics applied to the one or more provider performance metrics. By way of non-limiting example, the one or more heuristics may comprise applying a weighted score to each payment gateway provider 11 based on the success rate metric, the response latency metric (and optionally the error frequency metric), and ranking the payment gateway providers 11 according to the weighted score. In some embodiments, the one or more heuristics may further include excluding a payment gateway provider 11 from the ranked list 502 upon detection that the payment gateway provider 11 is unavailable, disabled, or otherwise not eligible for a given transaction.

In some embodiments, the provider performance metrics derived from the transaction logs 504 form part of a closed-loop feedback mechanism. In particular, transaction outcomes are continuously recorded in the transaction logs 504 and are processed to update provider performance metrics, which are then used to dynamically modify the ordering of providers in the ranked list 502 for subsequent transactions. In this manner, provider selection is adaptively adjusted based on historical transaction outcomes.

In some embodiments, the ranked list 502 further accounts for a geographic feature associated with the PoS platform 100 and/or the merchant 2 operating the PoST device 12. By way of non-limiting example, the geographic feature may comprise a merchant country or region. In such embodiments, the geographic feature is mapped to one or more predefined sets of eligible payment gateway providers 11. In this manner, the ranked list 502 may be constrained to a region-specific provider set prior to applying ranking heuristics, thereby promoting selection of providers suitable for a given geography.

In some embodiments, geographic information associated with the PoST device 12 is first used to determine a subset of eligible payment gateway providers 11. The ranked list 502 is then generated by applying performance-based ranking heuristics to the subset of eligible providers.

In some embodiments, the ranked list 502 is determined based on one or more selection criteria applicable to the selected payment method, including, by way of non-limiting example, (i) geographic configuration information associated with the PoST device 12 (e.g., merchant country/region), and (ii) provider performance metrics derived from the transaction logs 504 of the selected payment method. In some embodiments, the ranked list 502 may be generated locally by the orchestration application 114 and/or provided (in whole or in part) by the orchestration server 501.

In some embodiments, the ranked list 502 is updated on a periodic basis to reflect transaction activities that occurred recently. For example, the ranked list 502 may be updated on an hourly basis, a daily basis, or a weekly basis and the like. Alternatively, instead of being updated on a periodic basis, the ranked list 502 may be updated after a predetermined number of transactions has happened (for example, updating the ranked list 502 after processing 100 transactions).

It should be understood that the ranked list 502 is payment-method specific. In other words, the ranked list 502 for credit card payments may differ from the ranked list 502 for a debit payment, a buy-now-pay-later payment, a cryptocurrency payment, an email payment link, an SMS payment link, a QR code payment, an automated voice communication payment.

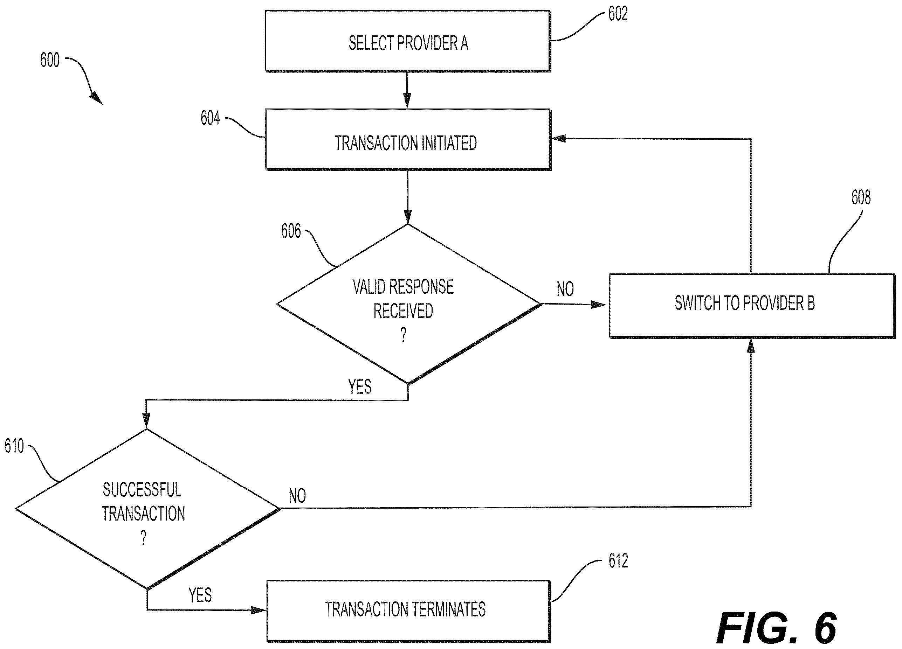

With reference to Fig. 6, there is depicted a payment process 600 explaining the point-of-sale (PoS) payment transaction in accordance with non-limiting embodiments of the present technology.

Let us assume for example, that the customer has selected payment by credit card for a given transaction. In some embodiments, the orchestration application 114 is configured to determine or obtain (from the orchestration server 501) the ranked list 502 that is specific to the selected payment method, such that the ranked list 502 includes only payment gateway providers 11 that are eligible to process transactions of the selected payment method (i.e. credit card).

At step 602, the orchestration application 114 selects a first payment gateway provider 11 (Provider A) corresponding to a first entry of the ranked list 502 for the selected payment method. In some embodiments, the first entry represents the payment getaway provider 11 that is ranked higher than other eligible payment getaway providers 11 based on the provider performance metrics, including at least one of transaction success rate, response latency or error frequency.

At step 604, the transaction is initiated by transmitting the transaction request 510 to Provider A via the API call. Generally speaking, the transaction request 510 comprises transaction parameters required by Provider A to initiate processing of the transaction, such, but not limited to, the credit card number, the transaction amount, currency information, merchant identifier, PoST device identifier, an idempotency key, and other transaction-related parameters.

In the context of the present technology, the idempotency key corresponds to a value that uniquely identifies a logical payment transaction and remains constant across retries, retransmissions or fallback attempts associated with the payment.

Generally speaking, in response to receiving the transaction request 510, the provider A performs an initial validation of the transaction request 510 and returns the API response 511 indicating an immediate outcome of the API exchange (described in detail below).

In some embodiments, in response to transmitting the transaction request 510, the orchestration application 114 initiates a timer to start a configurable timeout interval associated with Provider A and/or associated with the selected payment method. In some embodiments, the timeout interval is a duration selectable, for example, between 10 to 30 seconds. In some embodiments, the timeout interval may vary depending on the payment method used to initiate the transaction. For example, a timeout interval associated with a credit card payment transaction may differ from a timeout interval associated with a remote payment transaction initiated via SMS, email, or automated voice communication. In some embodiments, the duration, or time value, of the timeout interval may be set by an operator (not shown) of the orchestration server 501 via the SaaS management interface 503, and then transmitted to the orchestration application 114.

At step 606, the orchestration application 114 determines whether a valid API response 511 has been received from the Provider A in connection with the transaction request 510. In other words, the orchestration application 114 determines whether: (i) a valid confirmation has been received, (ii) an error condition has been received, or (iii) no response has been received within the timeout interval.

In some embodiments, the valid confirmation corresponds to the API response 511 indicating that the transaction request 510 has been received and accepted for downstream processing. Generally speaking, the downstream processing includes, but is not limited to, submission of the transaction request 510 to the issuer 6, execution of authentication procedures, fraud check, and the like. It should be understood that these downstream operations may be performed after the transmission of the API response 511.

In some embodiments, the error condition corresponds to the API response 511 that indicates failure of the API exchange or failure to process the transaction request 510. In some embodiments, the error condition may include receipt of a predefined API error code indicative of a refusal reason, such as gateway unavailability, authorization refusal and the like.

If there is the error condition or no response has been received within the timeout interval, the payment process 600 proceeds to step 608, where the orchestration application 114 initiates fallback processing by switching to a second payment gateway provider 11 (Provider B) corresponding to a next entry in the ranked list 502 after the Provider A, for the selected payment method. The payment process 600 then returns to step 604, and submits the transaction request 510 (including, *inter alia,* the idempotency key) to Provider B and the timeout interval is reinitiated for Provider B.

In some embodiments, the orchestration application 114 performs switching and fallback processing automatically without requiring intervention by the merchant 2 or the customer 4.

On the other hand, if the valid API response 511 has been received, the payment process 600 proceeds to step 610, where the transaction status information 514 indicating the status of the transaction is sent from the orchestration server 501 to the orchestration application 114. This push-based propagation of the transaction status information 514 enables near real-time delivery of confirmation to the PoS platform 100 without requiring polling by the orchestration application 114.

In the context of the present specification, "transaction status information 514" refers to push-based status data from the orchestration server 501 to the orchestration application 114 and indicative of an execution status of the transaction request 510. In some embodiments, the transaction status information 514 is generated or derived by the orchestration server 501 based on a callback 512 received from the provider 11. In some embodiments, the transaction status information 514 also includes correlation data (such as the idempotency key) enabling association of the status information with a corresponding transaction on the PoST device 12.

In some embodiments, the transaction status information 514 may indicate successful completion of the transaction or may indicate that the transaction did not complete successfully (e.g., authentication failure, fraud rejection, and the like), or may further indicate an intermediate or pending state.

In the context of the present specification, a "callback" refers to an asynchronous message generated by the payment gateway provider 11 after a transaction request 510 has been received by the payment gateway provider 11. The callback 512 is transmitted to the orchestration server 501 and is used to convey transaction state information associated with the transaction request 510. The callback 512 may include the transaction identifier or reference (such as the idempotency key) enabling correlation of the callback 512 with the corresponding transaction request 510.

In response to receiving the transaction status information 514 indicative of an unsuccessful transaction, the payment process 600 proceeds to step 608, where the orchestration application 114 initiates fallback processing by switching to a second payment gateway provider 11 (Provider B) corresponding to a next entry in the ranked list 502 after the Provider A, for the selected payment method. The payment process 600 then returns to step 604, and submits the transaction request 510 to Provider B and the timeout interval is reinitiated for Provider B.

In some embodiments, if the callback 512 is delayed beyond a timeout interval (which may be the same as the API response timeout interval, or different), the orchestration application 114 may initiate transmission of the transaction request 510 to a subsequent payment gateway provider 11 while the callback 512 associated with the prior provider 11 remains pending. In such embodiments, the transaction request 510 includes the idempotency key that uniquely identifies the logical payment transaction across fallback routing attempts. The orchestration server 501 is configured to apply idempotency logic such that, upon receipt of a first callback 512 indicating successful completion of the transaction, the transaction is marked as finalized and corresponding transaction status information 514 is propagated to the PoST device 12. Any subsequent callbacks 512 associated with the same idempotency key are treated as duplicate confirmations and do not trigger additional settlement actions, fallback processing, or user-visible state changes.

In some embodiments, instead of initiating the fallback processing in response to receiving the transaction status information 514 indicative of the unsuccessful transaction, the orchestration application 114 may prompt the merchant 2 or customer 4 to select a different payment method by displaying a message on the graphical user interface display 150.

Alternatively, in response to receiving the transaction status information 514 indicative of a successful transaction, the method proceeds to step 612 to terminate the transaction, by for example, updating a graphical user interface display 150 notifying successful completion of the transaction.

Although in the above example only one fallback from Provider A to Provider B is shown for purposes of illustration, it is contemplated that the payment process 600 may implement sequential fallback among a plurality of payment gateway providers 11. For example, if Provider B also yields an error condition or a no-response condition, the orchestration application 114 may further switch to a next provider (e.g., Provider C) corresponding to a subsequent entry in the ranked list 502 for the selected payment method, and may continue iterating through the ranked list 502 until a transaction is successfully completed or until the eligible providers in the prioritized provider ranked list 502 are exhausted.

Although the payment process 600 has been explained with reference to a payment made by credit card, it should be understood that the payment process 600 applies *mutatis mutandis* to payment transactions initiated via the various local or remote payment options enabled by the PoS platform 100. Accordingly, transaction requests initiated via different payment options and communication channels are subject to provider selection, timeout monitoring, callback processing, fallback handling, and transaction status synchronization in a unified manner.

In some embodiments, information obtained during execution of the payment process 600 is recorded in the transaction logs 504. In particular, transaction-level information received by the orchestration application 114, such as synchronous API responses 511 received from payment gateway providers 11, and transaction-level information received by the orchestration server 501, such as asynchronous callbacks 512 and derived transaction status information 514, are stored in the transaction logs 504. The transaction logs 504 may include, by way of non-limiting example, provider identifiers, transaction identifiers, timestamps, response codes, refusal reasons or error indicators, transaction outcomes, and response timing information. The transaction logs 504 are usable to support transaction auditing, provider performance evaluation, generation of provider performance metrics, and subsequent provider selection or routing decisions.

In some embodiments, the transaction logs 504 are further usable as training data for one or more machine learning algorithms configured to analyze transaction-level information for the purpose of detecting anomalous transaction patterns or improving fraud prevention. In such embodiments, the machine learning algorithms may be trained using aggregated transaction outcome data, provider response information, refusal reasons, error indicators, and response timing information recorded in the transaction logs 504.

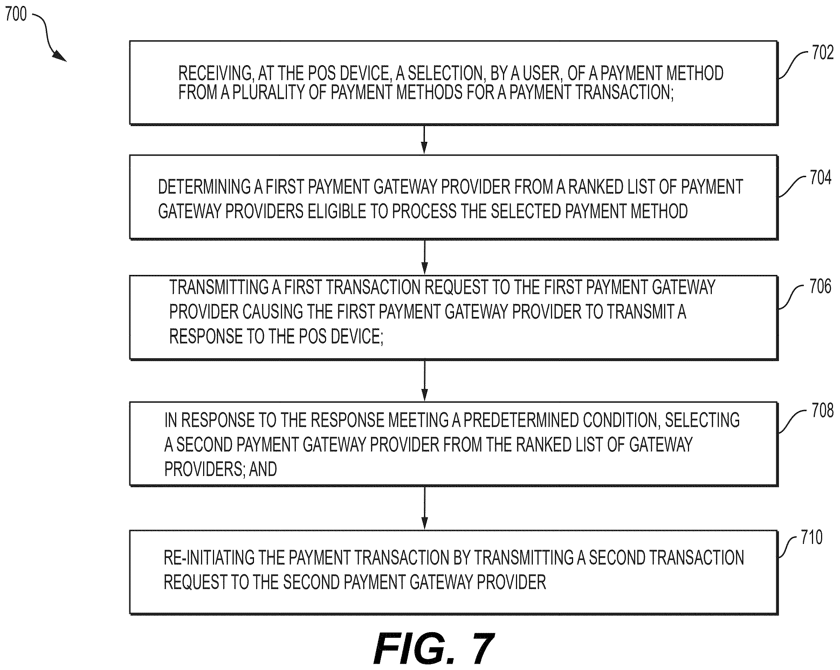

With reference to FIG. 7, there is depicted a flow chart of a method 700 for orchestrating a point-of-sale (PoS) payment transaction across a plurality of payment gateway providers, the method 700 being executable in accordance with non-limiting embodiments of the present technology. The method 700 can be executed by the orchestration application 114.

### STEP 702: RECEIVING, AT THE POS DEVICE, A SELECTION, BY A USER, OF A PAYMENT METHOD FROM A PLURALITY OF PAYMENT METHODS FOR A PAYMENT TRANSACTION

The method 700 starts at step 702, where the customer 4 (or the merchant 2) selects, using the graphical user interface display 150 of the PoST device 12, a payment method from a plurality of payment methods for a payment transaction.

In some embodiments, the plurality of payment methods includes at least one of: a credit payment, a debit payment, a buy-now-pay-later payment, a cryptocurrency payment, an email payment link, an SMS payment link, a QR code payment, an automated voice communication payment, and the like.

### STEP 704: DETERMINING A FIRST PAYMENT GATEWAY PROVIDER FROM A RANKED LIST OF PAYMENT GATEWAY PROVIDERS ELIGIBLE TO PROCESS THE SELECTED PAYMENT METHOD

At step 704, the orchestration application 114 is configured to determine or obtain the ranked list 502 that is specific to the selected payment method, such that the prioritized provider ranked list 502 includes only payment gateway providers 11 that are eligible to process transactions of the selected payment method.

The orchestration application 114 selects a first payment gateway provider 11 (Provider A) corresponding to a first entry of the ranked list 502 for the selected payment method.

### STEP 706: TRANSMITTING A FIRST TRANSACTION REQUEST TO THE FIRST PAYMENT GATEWAY PROVIDER CAUSING THE FIRST PAYMENT GATEWAY PROVIDER TO TRANSMIT A RESPONSE TO THE POS DEVICE

Having selected Provider A as the first payment gateway provider 11, the orchestration application 144 transmits the transaction request 510 to Provider A via the API call. Generally speaking, the transaction request 510 comprises transaction parameters required by Provider A to initiate processing of the transaction, such as the credit card number, the transaction amount, currency information, merchant identifier, PoST device 12 identifier, the idempotency key, and other transaction-related parameters.

Generally speaking, in response to receiving the transaction request 510, the provider A performs an initial validation of the transaction request 510 and returns the API response 511 indicating an immediate outcome of the API exchange.

### STEP 708: IN RESPONSE TO THE RESPONSE MEETING A PREDETERMINED CONDITION, SELECTING A SECOND PAYMENT GATEWAY PROVIDER FROM THE RANKED LIST OF GATEWAY PROVIDERS

At step 708, the orchestration application is configured to determine if the API response 511 meets at least one of the following conditions: (i) the API response 511 was not received by the orchestration application 114 within a defined period from the transmission of the transaction request 510 (in other words, received outside of the timeout interval), and (ii) the API response 511 is an error response indicating that the transaction request 510 cannot be processed by the Provider A.

If there is error condition or no response has been received within the timeout interval, the orchestration application 114 initiates fallback processing by switching to a second payment gateway provider 11 (Provider B) corresponding to a next entry in the ranked list 502 after the Provider A, for the selected payment method.

### STEP 710: RE-INITIATING THE PAYMENT TRANSACTION BY TRANSMITTING A SECOND TRANSACTION REQUEST TO THE SECOND PAYMENT GATEWAY PROVIDER

At step 710, the orchestration application 114 re-initiate the payment transaction by transmitting the transaction request 510 to the Provider B.

The Method 700 then terminates.

It should be apparent to those skilled in the art that at least some embodiments of the present technology aim to expand a range of technical solutions for addressing a particular technical problem encountered by PoS systems, namely, limited transaction reliability and resilience resulting from dependency on a single payment service provider or static transaction routing logic. In particular, embodiments of the present technology provide a technical framework for dynamically orchestrating transaction execution across multiple payment gateway providers, monitoring transaction responses and execution outcomes, and adaptively modifying routing behavior based on observed transaction-level information. In this manner, the present technology improves transaction availability, reduces failed or repeated transaction attempts, and mitigates exposure to unreliable or fraudulent transaction execution paths through technical means implemented within a distributed transaction processing architecture.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, sub-divided, or re-ordered without departing from the teachings of the present technology. Accordingly, the order and grouping of the steps is not a limitation of the present technology.

## Claims

1. A computer-implemented method for orchestrating a point-of-sale (PoS) payment transaction across a plurality of payment gateway providers, the method executable by a processor of a PoS device, the method comprising:
receiving, at the PoS device, a selection, by a user, of a payment method from a plurality of payment methods for a payment transaction;
determining a first payment gateway provider from a ranked list of payment gateway providers eligible to process the selected payment method;
transmitting a first transaction request to the first payment gateway provider causing the first payment gateway provider to transmit a response to the PoS device;
in response to the response meeting a predetermined condition, selecting a second payment gateway provider from the ranked list of gateway providers; and
re-initiating the payment transaction by transmitting a second transaction request to the second payment gateway provider.

2. The method of claim 1, wherein the plurality of payment methods comprises at least one of a credit payment, a debit payment, a buy-now-pay-later payment, a cryptocurrency payment, an email payment link, an SMS payment link, a QR code payment and/or an automated voice communication payment.

3. The method of claim 1 or 2, wherein the first transaction request and the second transaction request are a respective API request.

4. The method of any one of claims 1 to 3, wherein the predetermined condition is one of:
the response is not received by the PoS device within a defined period from the transmission of the first transaction request;
the response received by the PoS device is an error response indicating that the payment transaction cannot be successfully processed by the first payment gateway provider.

5. The method of claim 4, further comprising initiating, by the PoS device, a timer upon transmission of the first transaction request.

6. The method of any one of claims 1 to 5, wherein the PoS device is communicatively coupled to a server, the method further comprising:
receiving, by the PoS device, transaction status information generated by the server, the transaction status information being derived from a callback corresponding to the payment transaction, wherein the callback comprises a message generated by the second payment gateway provider, and wherein the transaction status information is indicative of an execution status of the payment transaction.

7. The method of claim 6, further comprising displaying, on a graphical user interface of the PoS device, the execution status of the payment transaction based on the transaction status information.

8. The method of claim 4, wherein the PoS device is communicatively coupled to a server, the method further comprising, receiving from the server, a time value associated with the defined period.

9. The method of any one of claims 1 to 7, wherein the ranked list of payment gateway providers has been previously generated based on at least one of:
payment gateway provider availability;
transaction cost parameter;
performance metrics associated with payment gateway providers, the performance metric for a given payment gateway provider comprising at least one of a success rate metric, a response latency metric and an error frequency metric; and
a geographical location of the PoS device.

10. The method of claim 6, further comprising updating the ranked list of gateway providers based on transaction data received by the PoS device during execution of the payment transaction, the transaction data including at least one of the response received from the first gateway provider and the transaction status information received from the server.

11. The method of claim 10, further comprising using the updated ranked list of gateway providers to determine a payment gateway provider for a subsequent payment transaction.

12. The method of claim 1, further comprising, in response to the predetermined condition being met for the second gateway provider, selecting a third payment gateway provider from the ranked list of gateway providers and transmitting a third transaction request to the third payment gateway provider.

13. The method of any one of claims 1 to 12, wherein the re-initiating the payment transaction is executed without notifying the user.

14. A point-of-sale (PoS) device for orchestrating a payment transaction across a plurality of payment gateway providers, the PoS device comprising a processor configured to:
receive, a selection by a user of a payment method from a plurality of payment methods for the payment transaction;
determine a first payment gateway provider from a ranked list of payment gateway providers eligible to process the selected payment method;
transmit a first transaction request to the first payment gateway provider to cause the first payment gateway provider to transmit a response to the PoS device;
in response to the response meeting a predetermined condition, select a second payment gateway provider from the ranked list of gateway providers; and
re-initiate the payment transaction by transmitting a second transaction request to the second payment gateway provider.

15. A non-transitory computer-readable medium comprising executable instructions which, when executed by at least one processor, cause the at least one processor to carry out steps of a method for orchestrating a point-of-sale (PoS) payment transaction across a plurality of payment gateway providers, the method comprising:
receiving, at the PoS device, by a user, of a payment method from a plurality of payment methods for a payment transaction;
determining a first payment gateway provider from a ranked list of payment gateway providers eligible to process the selected payment method;
transmitting a first transaction request to the first payment gateway provider causing the first payment gateway provider to transmit a response to the PoS device;
in response to the response meeting a predetermined condition, selecting a second payment gateway provider from the ranked list of gateway providers; and
re-initiating the payment transaction by transmitting a second transaction request to the second payment gateway provider.
